**Europäisches Patentamt**

**European Patent Office**

**Office européen des brevets**

(11) Veröffentlichungsnummer: **0 241 652**
**B1**

(12) **EUROPÄISCHE PATENTSCHRIFT**

(45) Veröffentlichungstag der Patentschrift: **16.05.90**

(51) Int. Cl.⁵: **B 61 F 5/52, B 61 F 5/14**

(21) Anmeldenummer: **87101409.8**

(22) Anmeldetag: **03.02.87**

(54) **Drehgestell für ein Schienenfahrzeug.**

(30) Priorität: **16.04.86 DE 3612797**

(43) Veröffentlichungstag der Anmeldung:
**21.10.87 Patentblatt 87/43**

(45) Bekanntmachung des Hinweises auf die
Patenterteilung:
**16.05.90 Patentblatt 90/20**

(84) Benannte Vertragsstaaten:
**BE ES FR GB IT**

(56) Entgegenhaltungen:
**EP-A-0 031 008**
**US-A-4 064 809**
**US-A-4 134 343**

(73) Patentinhaber: **Messerschmitt-Bölkow-Blohm
Gesellschaft mit beschränkter Haftung
Robert-Koch-Strasse
D-8012 Ottobrunn (DE)**

(72) Erfinder: **Nowak, Franz
Menlanstrasse 23
D-8028 Taufkirchen (DE)**
Erfinder: **Leo, Rolf
Altdorferstrasse 8
D-8857 Wertingen (DE)**
Erfinder: **Hofer, Franz
Benno-Benedicterstrasse 22
D-8850 Donauwörth (DE)**
Erfinder: **Oefner, Walter
Plankamerstrasse 22
D-8156 Otterfing (DE)**

Courier Press, Leamington Spa, England.

**Beschreibung**

Die Erfindung bezieht sich auf ein Drehgestell für ein Schienenfahrzeug mit einem Drehgestellrahmen in Faserverbundbauweise nach dem Oberbegriff des Patentanspruchs 1.

Bei einem bekannten Drehgestell dieser Art (DE—C—29 52 182), dessen Drehgestellrahmen aus einer H-förmigen, die Aufgabe der Primärfederung übernehmenden Faserverbundstruktur mit zwei elastisch ausgebildeten, die Radsatzachsen lagernden Längsträgern und einem diese mittig miteinander verbindenden, den Wagenkasten tragenden Querträger besteht, der im Betrieb sehr komplexen Biege-, Schub-, Torsions- und Normalkraftbelastungen unterworfen ist, ergibt sich die Schwierigkeit, den Querträger und vor allem dessen Eckverbindungen zu den Längsträgern in einer den Festigkeits- und Steifigkeitsforderungen entsprechenden Faserverbundbauweise zu gestalten.

Aufgabe der Erfindung ist es, bei einem Drehgestell der beanspruchten Art die Belastungen so über den Drehgestellrahmen zu verteilen, daß diese auf fertigungstechnisch einfache Weise aus Faserverbundwerkstoff herzustellen ist.

Diese Aufgabe wird erfindungsgemäß durch das im Anspruch 1 gekennzeichnete Drehgestell gelöst.

Bei dem erfindungsgemäßen Drehgestell werden der oder die Faserverbund-Querträger und die Querträger-Eckverbindungen von den aus der Anlenkung des Wagenkastens resultierenden Längs- und Querkraftbeanspruchungen entlastet und die schubsteife Verkoppelung der Längsträger von dem plattenförmigen Mittelteil mitübernommen, und Mittelplatte und Querträger bilden zwischen den Längsträgern mehrere getrennte Lastübertragungspfade mit jeweils spezifischen, von einer für Faserverbundwerkstoffe störenden Kraftüberlagerung freien Belastungen, wodurch eine hochgradig faserverbundgerechte Gestaltung des Drehgestellrahmens erzielt und die Herstellung der Faserverbundstruktur mit der geforderten Festigkeit und Steifigkeit, vor allem im Querträgerbereich einschließlich der Querträger-Eckverbindungen, ganz erheblich leichter wird.

Da aufgrund der erfindungsgemäßen Gestaltung des Drehgestellrahmens auch das mittlere Plattenteil unter Last hochgradig faserverbundgerechten Belastungen ausgesetzt ist, wird es in besonders bevorzugter Ausgestaltung gemäß Anspruch 2 ebenfalls aus Faserverbundwerkstoff hergestellt. In diesem Fall besteht das Plattenteil im Hinblick auf eine fertigungstechnisch einfache Ausbildung mit der erforderlichen Biegesteifigkeit gemäß Anspruch 3 zweckmäßigerweise aus mehreren Faserverbundschichten mit zwischen den Schichten eingelegten Verstärkungsrippen, und eine weitere fertigungstechnische Vereinfachung wird dadurch erreicht, daß gemäß Anspruch 4 als Verstärkungsrippen vorgehärtete Faserverbundrohre vorgesehen und diese gemäß Anspruch 5 als Wickelkörper hergestellt sind.

Eine für die Längs- und Querkraftaufnahme besonders günstige Anordnung der Verstärkungsrippen des Plattenteils ist in den Ansprüchen 6 und 7 gekennzeichnet, wobei die verstärkungsrippenfreie Ausbildung der seitlichen Platten-Endabschnitte gemäß Anspruch 7 im Hinblick auf die erforderliche Torsionselastizität des Plattenteils von besonderem Vorteil ist.

In weiterer, besonders bevorzugter Ausgestaltung der Erfindung enthält das Plattenteil gemäß Anspruch 8 eine zentrale, die Drehzapfenanordnung des Wagenkastens aufnehmende Aussparung und am unteren Ende der Drehzapfenanordnung ist ein die zentrale Aussparung übergreifender Anschlag befestigt, wodurch auf einfache Weise zum einen eine Notführung der wagenkastenseitigen Drehzapfenanordnung in Plattenmitte für den Fall eines Bruchs der zwischen Drehzapfenanordnung und Mittelplatte zur Längskraftübertragung vorgesehenen Lenker und zum anderen eine beim Anheben des Wagenkastens wirksame Drehgestellanhebevorrichtung geschaffen wird.

Die an der Mittelplatte angreifenden Biegemomente werden gemäß Anspruch 9 vorzugsweise dadurch reduziert, daß zumindest eine Lasteinleitungsstelle mehrteilig mit einem auf der Plattenoberseite und einem auf der Plattenunterseite angeordneten Lasteinleitungselement ausgebildet ist, so daß die zwischen Wagenkasten und Lasteinleitungselementen übertragenen Längs-bzw. Querkräfte in der Mittelplatte entgegengesetzt gerichtete, einander zumindest teilweise aufhebende Biegemomente hervorrufen. So werden insbesondere die Lasteinleitungsstellen für die Querabstützung des Wagenkastens gemäß Anspruch 10 vorzugsweise zweiteilig ausgebildet, wobei an das jeweilige Lasteinleitungselement auf der Plattenunterseite ein mit dem Wagenkasten verbundener Querdämpfer angelenkt ist, während das Lasteinleitungselement auf der Plattenoberseite einen die Querauslenkung des Wagenkastens federnd aufnehmenden Puffer trägt.

Schließlich ist der Drehgestell-rahmen in besonders bevorzugter Weise gemäß den Ansprüche 11 und 12 als Doppel-H-Rahmen ausgebildet, wodurch eine sehr flache Bauweise des Drehgestellrahmens und eine einfache Unterbringung der Mittelplatte ermöglicht und aufgrund der Querträger-Verdoppelung eine weitere Entlastung jedes einzelnen Querträgers und seiner zugeordneten Eckverbindungen erreicht wird. Durch die radnahe Anordnung der Querträger können ferner auch die Radbremsvorrichtungen auf belastungsgünstige Weise unmittelbar am vorderen bzw. hinteren Querträger befestigt sein.

Die Erfindung wird nunmehr anhand eines Ausführungsbeispieles in Verbindung mit den Zeichnungen näher erläutert. Es zeigen in schematischer Darstellung:

Fig. 1 die Aufsicht eines Schienenfahrzeug-Drehgestells;

Fig. 2 einen Teilschnitt längs der Linie II—II der Fig. 1;

Fig. 3 die Aufsicht der Faserverbund-Mittelplatte des Drehgestellrahmens; und

Fig. 4 einen Teilschnitt längs der Linie IV—IV der Fig. 3.

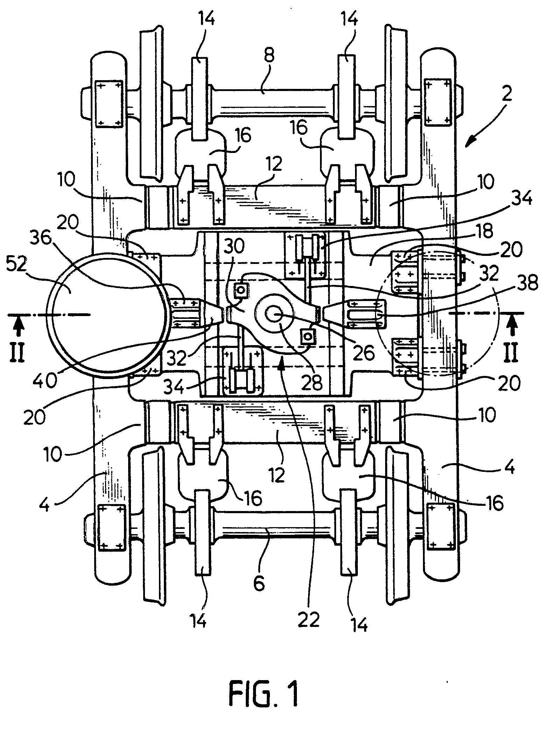

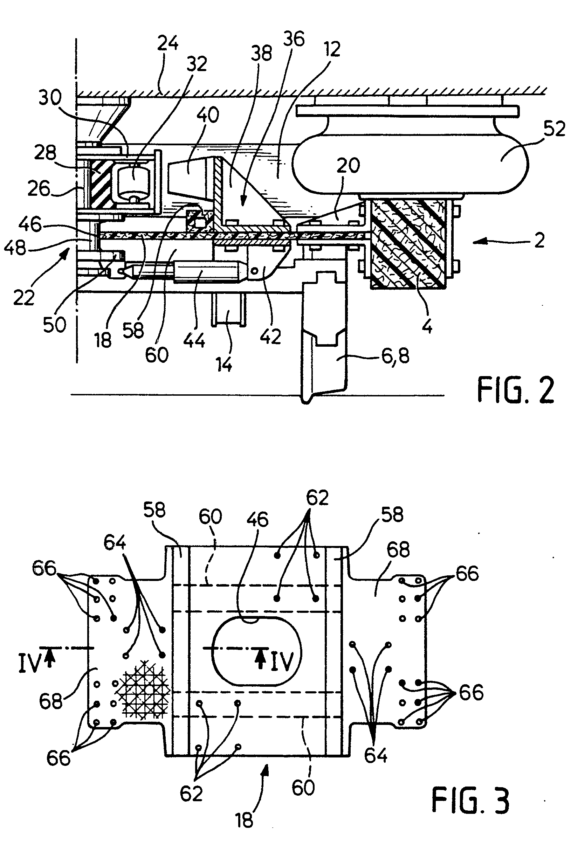

Das in den Fign. 1 und 2 gezeigte Drehgestell enthält einen Doppel-H-Drehgestellrahmen 2 in Form einer Faserverbundstruktur, die außer den Trag- und Führungsaufgaben auch die Aufgabe der Primärfederung übernimmt, mit zwei Längsträgern 4, die ein definiertes, sich in Längsrichtung änderndes Elastizitätsverhalten senkrecht zur Drehgestellebene, also zur Zeichenebene der Fig. 1 aufweisen und an deren relativ elastisch ausgebildeten Endabschnitten der vordere bzw. hintere Radsatz 6, 8 des Drehgestells gelagert ist. Die Längsträger 4 sind miteinander durch zwei symmetrisch zur Drehgestellmitte voneinander beabstandete, radnah angeordnete, jeweils über Eckverbindungen 10 integral seitlich mit den Längsträgern 4 verbundene Querträger 12 verkoppelt, die jeweils aus einem relativ torsionselastischen, jedoch biege- und in Drehgestellebene schubsteifen Faserverbund-Wickelkörper bestehen. An den Querträgern 12 sind die mit den Bremsscheiben 14 der Radsätze 6, 8 zusammenwirkenden Scheibenbremsvorrichtungen 16 befestigt.

Der Faserverbund-Rahmen 2 enthält ferner ein zwischen den Querträgern 12 angeordnetes, als Rahmenversteifungselement ausgebildetes mittleres Plattenteil 18, das über sehr steife Metallbeschläge 20 seitlich an die Längsträger 4 angeschlossen ist und diese querträgerunabhängig schubsteif miteinander verkoppelt. Das Plattenteil 18, das ebenfalls aus Faserverbundwerkstoff besteht und demgemäß eine hohe Korrosionsfestigkeit und gute Schalldämpfungseigenschaften besitzt, dient zur Übertragung der aus der Wagenkastenanlenkung resultierenden Längs- und Querkräfte zwischen der Wagenkasten-Drehzapfenanordnung 22 und den Längsträgern 4 des Drehgestellrahmens 2.

Die Drehzapfenanordnung 22 enthält einen zentralen, an der Unterseite des Wagenkastens 24 befestigten Drehzapfen 26, der über ein Elastomerlager 28 begrenzt drehbeweglich in einem Querhaupt 30 gelagert ist, welches mit zwei, beidseitig des Drehzapfens 26 angeordneten Längslenkern 32 gelenkig verbunden ist, die jeweils an eine lagerbockartige, am mittleren Plattenteil 18 befestigte Lasteinleitungsstelle 34 schwenkbar angeschlossen sind. Auf diese Weise werden die aus der Wagenkastenanlenkung resultierenden, in Drehgestellebene wirkenden Längskräfte über den Drehzapfen 26, das Elastomerlager 28, das Querhaupt 30 und die Längslenker 32 an die Lasteinleitungsstellen 34 übertragen und vom mittleren Plattenteil 18 aufgenommen.

Die Querabstützung des Wagenkastens bezüglich des Drehgestells erfolgt über zweiteilige, ebenfalls am mittleren Plattenteil 18 befestigte Lasteinleitungsstellen 36, die jeweils aus einem an der Plattenoberseite befestigten Lasteinleitungselement 38 mit einem die Querauslenkungen des Querhauptes 30 federnd aufnehmenden Puffer 40, sowie aus einem an der Plattenunterseite angeordneten Lasteinleitungselement 42 bestehen, welches über einen Querdämpfer 44 (Fig. 2) mit dem unteren, eine zentrale Aussparung 46 des mittleren Plattenteils 18 durchgreifenden Endabschnitt 48 der Drehzapfenanordnung 22 verbunden ist. Die aus der Wagenkastenanlenkung resultierenden, in Drehgestellebene wirksamen Querkräfte werden somit einerseits über das Querhaupt 30, die Puffer 40 und die Lasteinleitungselemente 38 und andererseits über die Querdämpfer 44 und die Lasteinleitungselemente 42 in Form entgegengesetzt gerichteter, sich an der jeweiligen Lasteinleitungsstelle 36 zumindest teilweise aufhebender Biegemomente in das mittlere Plattenteil 18 eingeleitet.

Der Drehzapfen-Endabschnitt 48 bildet zusammen mit der Aussparung 46 des mittleren Plattenteils 18 eine Notführung für den Fall, daß die Längs- oder Querabstützung des Wagenkastens 24 am Drehgestell ausfällt, z.B. bei einem Bruch der Längslenker 32, und ist ferner an seinem unteren Ende mit einer die Aussparung 46 übergreifenden Erweiterung 50 versehen, durch die sichergestellt wird, daß beim Anheben des Wagenkastens 24 das gesamte Drehgestell über die dann an der Unterseite des mittleren Plattenteils 18 anschlagende Erweiterung 50 mitangehoben wird.

Die Abstützung des Wagenkastens am Drehgestell senkrecht zur Drehgestellebene erfolgt über zwischen Wagenkasten 24 und Längsträgern 4 angeordnete Luftfedern 52 und (nicht gezeigte) Vertikaldämpfer.

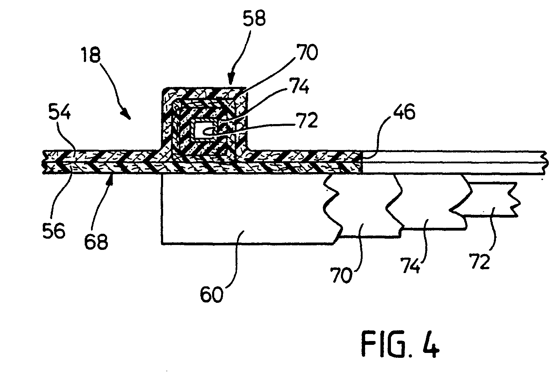

Das mittlere Plattenteil 18, das den gesamten Innenraum des doppel-H-förmigen Faserverbund-Rahmens 2 ausfüllt und dessen Schubsteifigkeit in Drehgestellebene gewährleistet, ist gemäß den Fign. 3 und 4 als im wesentlichen aus zwei Faserverbundschichten 54 und 56 bestehende Faserverbundplatte mit vielfach unterschiedlicher Faserorientierung ausgebildet, d.h. ihre Verstärkungsfasern verlaufen -wie durch die Kreuzschraffur in Fig. 3 angedeutet- z.B. unter 0°, 90° und ±45°; sie besitzt demgemäß eine quasiisotrope Faserorientierung, also in allen Richtungen im wesentlichen gleiche Festigkeits- und Steifigkeitseigenschaften in der horizontalen Platten- und somit in der Drehgestellebene.

Da die Längs- und Querkraftabstützung des Wagenkastens 24 über die Lasteinleitungsstellen 34, 36 nicht in der Plattenebene erfolgt und daher das horizontale, mittlere Plattenteil 18 biegemoment-belastet ist, ist es durch Längs- und Querrippen 58, 60 verstärkt. Die auf der Plattenoberseite liegenden Längsrippen 58 verlaufen parallel zueinander durchgehend vom vorderen zum hinteren Platten- rand seitlich neben der zentralen Aussparung 46 und in unmittelbarer Nähe der jeweiligen Befestigungsbohrungen 62 für die Längskraft-Einleitungsstellen 34, während die in Fig. 3 gestrichelten, auf der Plattenunterseite liegenden, ebenfalls parallel zueinander unmittelbar neben der zentralen Aussparung 46 verlaufenden Querrippen 60 sich nur über den mittleren Plattenbereich erstrecken und an den Längsrippen 58 und den jeweiligen Befestigungsbohrungen 64 für die Querkraft-Einleitungsstellen 36 enden, so daß die seitlichen, über die Befestigungsbohrungen 66 für die Metallbeschläge 20 an die Längsträger 4 angeschlossenen Endabschnitte 68 der Faserverbundplatte 18 verstärkungsrippenfrei ausgebildet sind und daher die Platte 18 eine ausreichend hohe Torsionselastizität für ein Verwinden des Drehgestellrahmens um die Querachse besitzt.

Wie Fig. 4 zeigt, werden die Verstärkungsrippen 58, 60 durch eine hutprofilartige Ausbildung der oberen bzw. unteren Faserverbundschicht 54, 56 gebildet, wobei ins Innere dieser hutprofilartigen Versteifungen ein Faserverbundrohr 70 aus Carbonfasern eingesetzt ist, die wegen der erforderlichen Biege- und Torsionssteifigkeit je zur Hälfte aus unidirektional in Rippenlängsrichtung verlaufenden Kohlefasern und aus zur Rippenlängsrichtung unter ±45° verlaufenden Kohlefasern auf einen ein Vierkant-Hohlprofil 72 umschließenden Schaumstoffkern 74 gewickelt sind. Zur Herstellung der Faserverbundplatte 18 werden zunächst die Faserverbundrohre 70 gewickelt und ausgehärtet und dann die Faserverbundschichten 54 und 56 vorkonfektioniert und um die Faserverbundrohre 70 gelegt und anschließend unter Einschluß der Rohre 70 in einer Preßform ausgehärtet, woraufhin die Platte 18 mechanisch bearbeitet und verbohrt wird.

## Patentansprüche

1. Drehgestell für ein Schienenfahrzeug, bei dem der Drehgestellrahmen (2) zwei über Querträger (12) miteinander verbundene, an ihren Enden die Radsatzachsen (6, 8) lagernde Längsträger (4) aus einer die Aufgabe der Primärfederung zumindest teilweise übernehmenden, im Bereich der Längsträger elastisch, im Querträgerbereich relativ starr ausgebildeten Faserverbundstruktur aufweist, dadurch gekennzeichnet, daß zumindest ein Querträger (12) über Eckverbindungen (10) mit den Längsträgern (4) verbunden ist und daß unabhängig davon die Längsträger (4) durch ein als Rahmenversteifungselement in Drehgestellebene ausgebildetes, torsionselastisches mittleres Plattenteil (18) schubsteif miteinander verkoppelt sind und das Plattenteil mit Lasteinleitungsstellen (34, 36) für die Längs- und Querabstützung des Wagenkastens (24) versehen und zur Längs- und Querkraftübertragung zwischen Lasteinleitungsstellen (34, 36) und Längsträgern (4) biegefest ausgebildet ist.

2. Drehgestell nach Anspruch 1, dadurch gekennzeichnet, daß das Plattenteil (18) aus Faserverbundwerkstoff besteht.

3. Drehgestell nach Anspruch 2, dadurch gekennzeichnet, daß das Plattenteil (18) aus mehreren Faserverbundschichten (54, 56) mit zwischen die Schichten eingelegten Verstärkungsrippen (58, 60, 70) besteht.

4. Drehgestell nach Anspruch 3, dadurch gekennzeichnet, daß als Verstärkungsrippen (58, 60, 70) vorgehärtete Faserverbundrohre (70) vorgesehen sind.

5. Drehgestell nach Anspruch 4, dadurch gekennzeichnet, daß die Faserverbundrohre (70) als Wickelkörper hergestellt sind.

6. Drehgestell nach einem der vorhergehenden Ansprüche, dadurch gekennzeichnet, daß als Verstärkungsrippen für das Plattenteil (18) Längs- und Querrippen (58, 60) vorgesehen sind.

7. Drehgestell nach Anspruch 6, dadurch gekennzeichnet, daß die Längsrippen (58) parallel zueinander durchgehend vom vorderen zum hinteren Plattenrand verlaufen, während sich die Querrippen (60) durchgehend nur über den mittleren Plattenbereich erstrecken und die seitlichen, an die Längsträger (4) angeschlossenen Platten-Endabschnitte (68) verstärkungsrippenfrei ausgebildet sind.

8. Drehgestell nach einem der vorhergehenden Ansprüche, dadurch gekennzeichnet, daß das Plattenteil (18) eine zentrale, die Drehzapfenanordnung (22) des Wagenkastens (24) aufnehmende Aussparung (46) aufweist und die Drehzapfenanordnung an ihrem unteren, die Aussparung durchgreifenden Endabschnitt (48) mit einer beim Anheben des Wagenkastens (24) an der Plattenunterseite anschlagenden und dadurch das Drehgestell mitanhebenden Erweiterung (50) versehen ist.

9. Drehgestell nach einem der vorhergehenden Ansprüche, dadurch gekennzeichnet, daß zumindest eine Lasteinleitungsstelle (36) mehrteilig mit einem Lasteinleitungselement (38) auf der Plattenober- und einem weiteren Lasteinleitungselement (42) gegenüberliegend auf der Plattenunterseite ausgebildet ist.

10. Drehgestell nach Anspruch 9, dadurch gekennzeichnet, daß die Lasteinleitungsstellen (36) für die Querabstützung des Wagenkastens (24) zweiteilig ausgebildet sind und an das jeweilige Lasteinleitungselement (42) auf der Plattenunterseite ein mit dem Wagenkasten (24) verbundener Querdämpfer (44) angelenkt ist, während das jeweilige Lasteinleitungselement (38) auf der Plattenoberseite mit einem das Querspiel des Wagenkastens (24) federnd begrenzenden Puffer (40) versehen ist.

11. Drehgestell nach einem der vorhergehenden Ansprüche, dadurch gekennzeichnet, daß der Drehgestellrahmen (2) einen vorderen und einen hinteren Querträger (12) aufweist und das Plattenteil (18) horizontal zwischen den beiden Querträgern angeordnet ist.

12. Drehgestell nach Anspruch 11, dadurch gekennzeichnet, daß die Querträger (12) jeweils radnah zum vorderen bzw. hinteren Radsatz (6, 8) angeordnet und die Radbremsvorrichtungen (16) an den Querträgern angebracht sind.

## Revendications

1. Bogie pour véhicule ferroviaire, dans lequel le châssis de bogie (2) présente deux supports longitudinaux (4) reliés entre eux par l'intermédiaire de supports transversaux (12) et portant à leurs extrémités les essieux (6, 8), suports composés d'une structure composite renforcée par fibres assumant au moins partiellement le rôle de suspension primaire, élastique dans la zone des supports longitudinaux et relativement rigide dans la zone des supports transversaux, caractérisé en ce qu'au moins un support transversal (12) est relié aux supports longitudinaux (4) par l'intermédiaire de liaisons de coin (10) et qu'indépendamment de cela, les supports longitudinaux (4) sont accouplés entre eux de manière rigide en cisaillement au moyen d'une partie de plaque centrale (18) réalisée sous la forme d'un élément de raidissement du châssis dans le plan du bogie et élastique en torsion et la partie de plaque est pourvue d'emplacements d'introduction de charge (34, 36) destinés à l'appui longitudinal et transversal de la caisse du wagon (24) et est conçue résistante à la flexion, en vue de transmettre les efforts longitudinaux et transversaux entre emplacements d'introduction de charge (34, 36) et supports longitudinaux (4).

2. Bogie selon la revendication 1, caractérisé en ce que la partie de plaque (18) est en matériau composite renforcé par fibres.

3. Bogie selon la revendication 2, caractérisé en ce que la partie de plaque (18) se compose de plusieurs couches de composite renforcé par fibres (54, 56) avec des nervures de renforcement (58, 60, 70) insérées entre les couches.

4. Bogie selon la revendication 3, caractérisé en ce que des tubes (70) en composite renforcé par fibres prédurcis sont prévus comme nervures de renforcement (58, 60, 70).

5. Bogie selon la revendication 4, caractérisé en ce que les tubes (70) en composite renforcé par fibres sont fabriqués sous la forme de corps bobinés.

6. Bogie selon l'une des revendications précédentes, caractérisé en ce que des nervures longitudinales et transversales (58, 60) sont prévues comme nervures de renforcement de la partie de plaque (18).

7. Bogie selon la revendication 6, caractérisé en ce que les nervures longitudinales (58) s'étendent, parallèles entre elles et continues, du bord avant au bord arrière de plaque, tandis que les nervures transversales (60) s'étendent de manière continu uniquement sur la zone centrale de la plaque et que les parties d'extrémité (68) de la plaque, latérales, raccordées aux supports longitudinaux (4) sont exempts de nervures de renforcement.

8. Bogie selon l'une des revendications précédentes, caractérisé en ce que la partie de plaque (18) présente un évidement central (46) recevant l'agencement à pivot (22) de la caisse de wagon (24) et que l'agencement à pivot est pourvu à sa partie d'extrémité inférieure (48), traversant l'évidement, d'un élargissement (50) vernant en butée sur la face inférieure de la plaque lors du soulèvement de la caisse de wagon (24) et entraînant vers le haut de ce fait le bogie.

9. Bogie selon l'une des revendications précédentes, caractérisé en ce qu'au moins un emplacement d'introduction de charge (36) est réalisé en plusieurs éléments, avec un élément d'introduction de charge (38) situé sur la face supérieure de plaque et un autre élément d'introduction de charge (42) situé en face, sur la face inférieure de plaque.

10. Bogie selon la revendication 9, caractérisé en ce que les emplacements d'introduction de charge (36) sont réalisés en deux parties, pour l'appui transversal de la caisse de wagon (24), et qu'un amortisseur transversal (44) relié à la caisse de wagon (24) est articulé sur l'élément d'introduction de charge (42) respectif situé sur la face inférieure de plaque, tandis que l'élément d'introduction de charge (38) respectif qui est situé sur la face supérieure de plaque est pourvu d'un tampon (40) limitant élastiquement le jeu transversal de la caisse de wagon (24).

11. Bogie selon l'une des revendications précédentes, caractérisé en ce que le châssis de bogie (2) présente un support transversal avant (42) et un support transversal arrière (12) et la partie de plaque (18) est disposée horizontalement entre les deux supports transversaux.

12. Bogie selon la revendication 11, caractérisé en ce que chaque support transversal (12) est disposé au voisinage des roues, près de l'essieu avant ou arrière (6, 8) et que les dispositifs de freinage sur roue (16) sont montés sur les supports transversaux.

**Claims**

1. A bogie for a rail vehicle, in which the bogie frame (2) has two longitudinal members (4) which are connected to one another by way of transverse members (12) and which at their ends support the wheel-set axles (6, 8) and which are made of a composite fibre structure which at least partially takes over the function of the primary suspension and which is designed so as to be elastic in the region of the longitudinal members and so as to be relatively rigid in the transverse-member region, characterised in that at least one transverse member (12) is connected by way of corner connections (10) to the longitudinal members (4) and in that independently thereof the longitudinal members (4) are coupled in a shear-resistant manner with one another by a torsionally-elastic central plate part (18) which is designed as a frame stiffening element in the bogie plane and the plate part is provided with load introduction points (34, 36) for the longitudinal and transverse support of the vehicle body (24) and is designed so as to be flexurally resistant for the longitudinal and transverse force transfer between load introduction locations (34, 36) and longitudinal members (4).

2. A bogie according to claim 1, characterised in that the plate part (18) consists of composite fibre material.

3. A bogie according to claim 2, characterised in that the plate part (18) consists of several com-

**EP 0 241 652 B1**

posite fibre layers (54, 56) having reinforcing ribs (58, 60, 70) inserted between the layers.

4. A bogie according to claim 3, characterised in that pre-hardened composite fibre tubes (70) are provided as the reinforcing ribs (58, 60, 70).

5. A bogie according to claim 4, characterised in that the composite fibre tubes (70) are produced as wound bodies.

6. A bogie according to one of the preceding claims, characterised in that longitudinal and transverse ribs (58, 60) are provided as the reinforcing ribs for the plate part (18).

7. A bogie according to claim 6, characterised in that the longitudinal ribs (58) extend parallel to one another continuously from the front to the rear edge of the plate, whilst the transverse ribs (60) extend continuously only over the central region of the plate and the lateral end portions (68) of the plate which are connected to the longitudinal members (4) are designed so as to be free from reinforcing ribs.

8. A bogie according to one of the preceding claims, characterised in that the plate part (18) has a central recess (46) which receives the pivot-pin arrangement (22) of the coach body (24) and the pivot-pin arrangement is provided, at its lower end portion (48) which engages through the recess, with a widening (50) which upon the raising of the vehicle body (24) strikes against the lower side of the plate and thereby co-raises the bogie.

9. A bogie according to one of the preceding claims, characterised in that at least one load introduction point (36) is designed in a multipart manner with a load introduction element (38) on the upper side of the plate and a further load introduction element (42) oppositely on the lower side of the plate.

10. A bogie according to claim 9, characterised in that the load introduction points (36) for the transverse support of the vehicle body (24) are designed in a two-part manner and hinged to the respective load introduction element (42) on the lower side of the plate is a transverse damper (44) which is connected to the vehicle body (24), whilst the respective load introduction element (38) on the upper side of the plate is provided with a buffer (40) which resiliently limits the transverse play of the vehicle body (24).

11. A bogie according to one of the preceding claims, characterised in that the bogie frame (2) has a front and a rear transverse member (12) and the plate part (18) is arranged horizontally between the two transverse members.

12. A bogie according to claim 11, characterised in that the transverse members (12) are arranged close to the wheels of the front or respectively rear wheel set (6, 8) and the wheel braking devices (16) are mounted on the transverse members.

FIG. 1

FIG. 2

FIG. 3

FIG. 4